# EUROPEAN PATENT APPLICATION

(11) **EP 4 711 274 A1**
(43) Date of publication of application: **18.03.2026**
(21) Application number: 24461616.5
(22) Date of filing: 13.09.2024
(51) Int. Cl.: B64D 11/06, B60N 2/75

(54) **SEAT ARMREST LOCKING MECHANISM**

(71) Applicant: B/E Aerospace, Inc., Winston-Salem, NC 27105 (US)
(72) Inventor: KOLODZIEJCZAK, Marcin Szymon, 51-317 Wroclaw (PL); KALISZCZYK, Piotr Krzysztof, 51-317 Wroclaw (PL); CHODYNIECKI, Marcin Adam, 51-317 Wroc aw (PL)
(74) Representative: Dehns

(57) **Abstract**

An armrest locking mechanism comprising: an axle (20) defining an axis (A) therethrough, an armrest structure (10) mounted relative to the axle to be rotatable relative to the axle about the axis between an open position and a stowed position, a locking mechanism mounted within the armrest structure for releasably locking the armrest relative to the axle in one or both of the open position and the stowed position, the locking mechanism comprising: a lever (32) and a pivot point (P) between the first end and the second end, an actuation member (30) extending out of the armrest structure and in engagement with the first end of the lever, and means for providing locking engagement between the second end of the lever and the axle, and a biasing component (34) arranged to bias the first end of the lever in a second axial direction such that the second end of the lever is biased in an opposite first axial direction into engagement with the axle.

## Description

### TECHNICAL FIELD

The present disclosure relates to a locking mechanism of a seat armrest.

### BACKGROUND

Many seats are provided with an armrest on which a person seated in the seat can rest their arm. Often, the armrests are moveable between an open (deployed) and a closed (stowed) position to allow the armrest to be folded away if not needed or to provide more space or access to/from the seat. Such armrests are, for example, common in aircraft, including airplanes and helicopters, and other vehicles. Typically, such armrests are pivotable about an axis from the stowed position where the armrest is in or close to the plane of the backrest of the seat, to the open position extending from the back of the seat to a position in which a person seated in the seat can rest their arm on the armrest.

As such armrests are often used in moving/high vibrational environments, it is desirable to incorporate a locking mechanism to lock the armrest in the open and/or in the stowed positions and prevent it from rattling/moving when in its end positions. The locking mechanism should, however, be simple to release so that the user can easily stow the armrest when needed.

There is a need, therefore, for an armrest locking mechanism that, in the locked state, provides secure, reliable locking resistant to vibrations, that can be easily manually released by e.g. a person in or near the seat.

### SUMMARY

Accordingly, there is provided an armrest locking mechanism comprising: an axle defining an axis therethrough, an armrest structure mounted relative to the axle to be rotatable relative to the axle about the axis between an open position and a stowed position, a locking mechanism mounted within the armrest structure for releasably locking the armrest relative to the axle in one or both of the open position and the stowed position, the locking mechanism comprising: a lever and a pivot point between the first end and the second end, an actuation member extending out of the armrest structure and in engagement with the first end of the lever, and means for providing locking engagement between the second end of the lever and the axle, and a biasing component arranged to bias the first end of the lever in a second axial direction such that the second end of the lever is biased in an opposite first axial direction into engagement with the axle.

The means for providing locking engagement may comprise a locking feature at the second end of the lever and means on the axle for lockingly engage with the locking feature when the locking feature is aligned with the means on the axle.

The means on the axle may comprise a first means corresponding to the open position of the armrest and a second means corresponding to the stowed position of the armrest.

The means for providing locking engagement may comprises a pin on the second end of the lever and one or more recesses on the axle to receive the pin.

The biasing component may be a spring arranged to bias the second end of the lever towards the axle. The actuation member may be a push button. The button may have a shaft to which the first end of the lever is attached. The biasing component may be attached to the shaft. The shaft may be provided with a recess to receive the biasing component.

Also provided is a seat having an armrest comprising an armrest locking mechanism as defined above. The seat may have a seat back and a seat pan, wherein the armrest is in or adjacent the plane of the seatback when in the closed position and substantially parallel to the seat pan when in the open position.

The seat may be an aircraft seat, e.g. in a helicopter or airplane.

### BRIEF DESCRIPTION

Examples of a locking mechanism according to the disclosure will now be described with reference to the drawings. It should be noted that these are examples only and variations are possible within the scope of the claims.
Figure 1 shows a 3D cut-away view of an armrest with a locking mechanism according to this disclosure.
Figure 2 shows a cut-away top view of an armrest such as shown in Fig. 1, showing the locking mechanism in more detail.
Figures 3A and 3B are provided to illustrate the operation of a locking mechanism according to the disclosure.

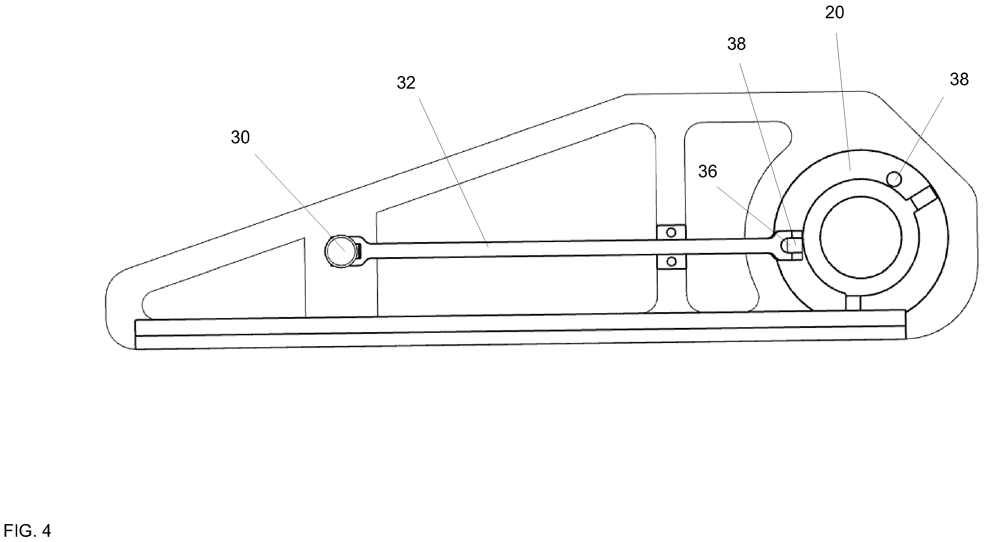

Figure 4 is a side view of an armrest such as shown in Fig. 1.

### DETAILED DESCRIPTION

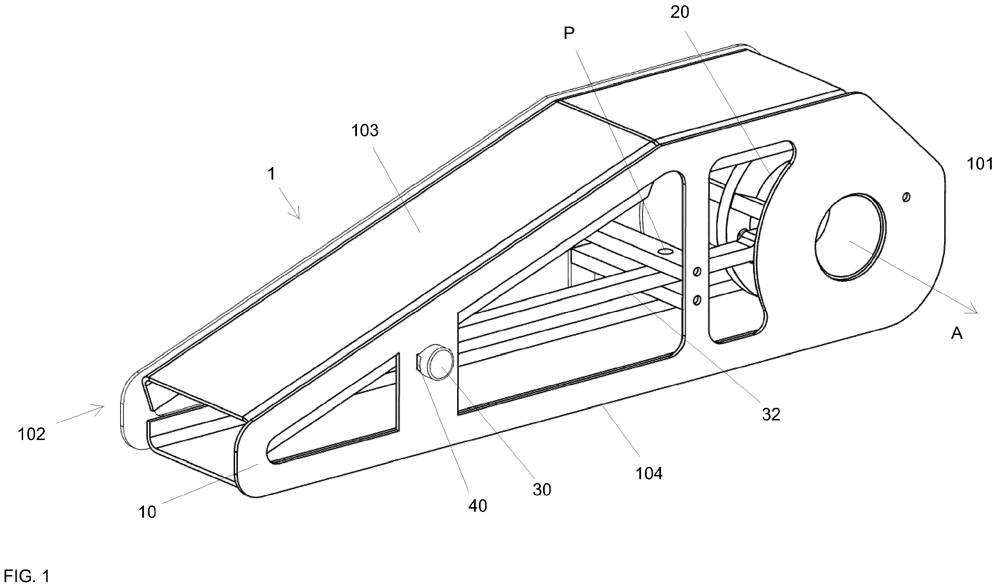

Figure 1 shows an armrest 1 into which a locking mechanism according to the disclosure can be incorporated. The armrest is shown here in the open or folded down/deployed position. The armrest has a frame 10 defining the outer shape of the armrest. Typically, cushioning or cladding may be provided over the frame for comfort and/or aesthetic reasons although in a basic form e.g. where low weight and/or cost takes priority over comfort/aesthetics, the armrest may be provided without any cushion or cladding or covering over the frame. Fig. 1 shows the armrest without any covering for ease of explanation.

The frame 10 can be made of any suitable material e.g. plastic or metal. Where weight and/or cost is an important consideration, e.g. in aircraft, the frame may be made of sheet metal and may be formed with cut-out sections 10a to reduce overall weight and material costs. Other materials and configurations are also possible.

The armrest shown in the example has a typical shape with a rear end 101 that is typically mounted to or adjacent the seat back, and a front end 102 that, in use, will be spaced from the seat back, and an armrest surface 103 extending from the rear to the front end. In the example, the armrest surface slopes down from the rear end to the front end to provide an ergonomically advantageous shape on which to rest the arm when in a seated position when the armrest is in the open position. Other shapes, e.g. a flat armrest surface, are, of course, also possible. The lower surface 104 of the armrest, opposite the armrest surface, is typically spaced from the seat pan when opened out.

The armrest is pivotal about the axis A of a pivot axle 20, between an open and a closed position. The axle 20 is located at or close to the rear end 101 of the armrest and is fixed such that the armrest parts rotate relative thereto.

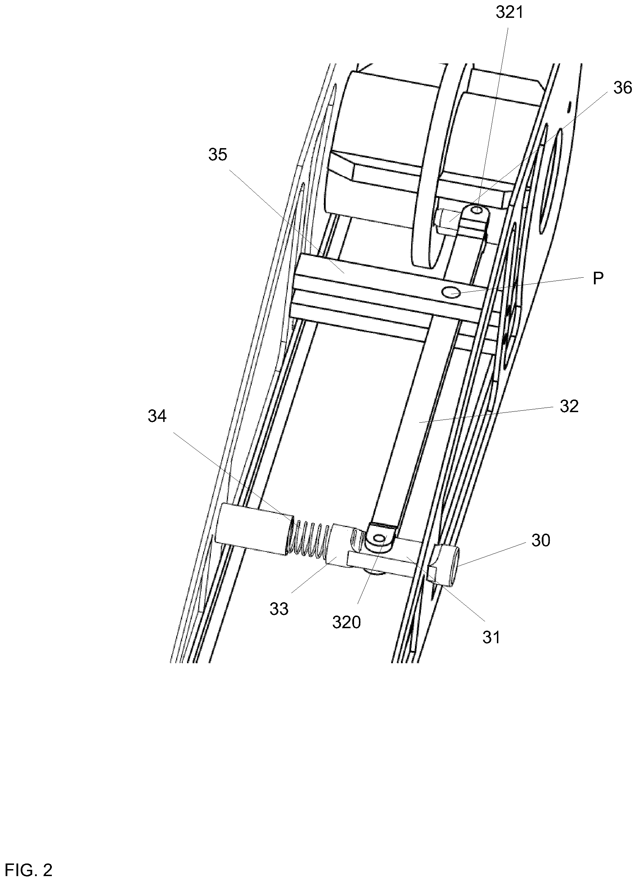

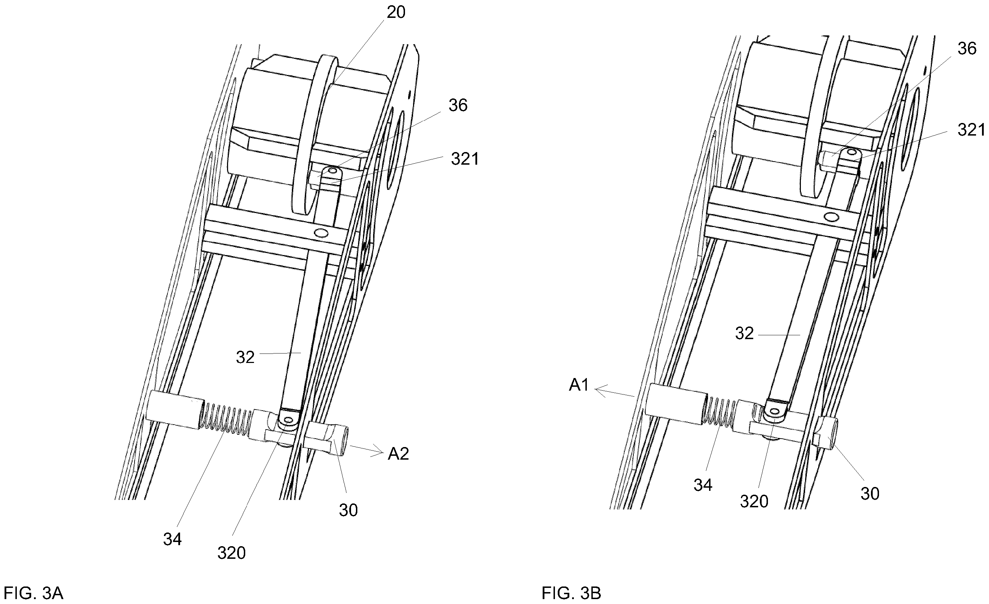

A locking mechanism, disclosed further below with reference to Figs. 2 and 3, is provided to lock the armrest in one or both of the open position and the stowed position. In the example shown, the locking mechanism is designed to lock the armrest in each of the open and the stowed position but it is also feasible that the locking mechanism only locks the armrest in one of the open and the stowed positions. The locking mechanism is biased to the locking position in engagement with the axle and can be released from the locked position, to enable the armrest to be folded to the other position on activation, by a user, of an actuating member 30 accessible to the user. In the example, the actuating member 30 is a push button 30 extending from the locking mechanism inside the armrest to the exterior of the armrest e.g. through a slot 40 in the frame of the armrest. The actuating member 30 must be configured to cause a lever 32 of the locking mechanism to pivot relative to the frame and the axle as described further below.

The locking mechanism, located within the armrest, will now be defined with reference to the example shown in Fig. 2.

The locking mechanism comprises a lever 32 having a first end 320 at or proximal to which the actuating member 30 is provided, and a second, opposite, locking end 321 configured to engage with the axle 20, in the locked position, as described further below. The lever 32 is pivotal about a pivot point P located between the first and second ends of the lever such that movement of the first end 320 in response to operation of the actuating member 30 in a first axial direction results in a corresponding movement of the second end 321 in an opposite axial direction.

The locking mechanism further comprises a biasing component 34, which, in the example shown is a spring 34 but which may be another biasing component, e.g. a component of resilient material. The biasing component 34 is configured to bias the first end of the lever in the second axial direction A2, so that the second end of the lever is biased in the first direction A1 in which it is engaged with the axle in a locked state. In the locked state, the lever 34 being engaged with the axle, the armrest is prevented from rotation relative to the axle 20. To unlock the locking mechanism, to release the armrest for rotation about the axle 20, the user operates the actuation member 30 e.g. pushes the push button 30 inwards relative to the frame (the 'first direction'), the lever 32 pivots about the pivot point P such that the second end 321 moves axial in the 'second direction' away from engagement with the axle 20. The armrest is then free to rotate about the axle to the other of the open and the stowed position.

Whilst it is possible to have only a single engagement location for the second end to engage with the lever in the locking state, corresponding to the arm being in one of the open and the stowed positions, the example shown has two engagement locations so that the second end of the lever 321 engages with the axle both when the armrest is in the open state and when it is in the stowed state.

Various configurations can be envisaged for engaging the second end 321 of the lever 32 with the axle 20. In the example shown, the second end of the lever is provided with a rod or pin 36 extending from the lever end in the axial direction, and a recess 38 or hole is provided in the axle at the or each engagement location to receive the pin 36 in the locking state. The pin 36 therefore engages in a hole or recess in the default state of the lever when it is biased by the bias component 34, and is moved out of the hole when the user actuates the button 30 against the force of the bias component 34.

The interaction of the bias component 34 with the first end of the lever 32, and of the actuation member 30 with the lever can be implemented in various ways to, respectively, bias the first end in the second direction and push the end of the lever in the first direction. In the example shown, the actuation member 30 is a push button mounted to a shaft 31 that is, in turn, fixed to or adjacent the first end 320 of the lever 32. The bias component - here a tension spring 34 - is attached to the shaft 31 at an end opposite the button. The spring may be received in a recess or cup 33 at the end of the shaft and may be supported at its other end relative to the armrest frame. In some examples, a support or guide member may be provided along or within the spring.

The pivot point P for the lever 32 may be provided by means of a support such as a beam 35 attached to the frame, and to which the lever 32 is pivotally mounted.

Operation of the locking mechanism will now be described with reference to Figs. 3A and 3B.

Fig. 3A shows the default position of the locking mechanism in the locked state. In this position, the spring 34 (or other biasing component) biases the first end 320 of the lever 32 and also the button 30 in the second axial direction A2, so that the button (or other actuating member) extends from the frame in the second direction A2. The pivotal arrangement of the lever means that in this state, the second end 321 of the lever is biased in the first axial direction A1 towards and into locking engagement with the axle 20 (in this example engagement is by means of locking pin 36 engaging in recess 38 in the axle 20). This means that the armrest is unable to rotate relative to the axle and, depending on the engagement location, locks the armrest in the open or the stowed position.

To unlock the armrest to enable it to be rotated about the axle to the other armrest position, button 30 is pressed in the first axial direction A1, against the force of the spring 34, as shown in Fig. 3B. This moves the first end 320 of the lever 32 in the first axial direction A1 and, due to the pivot about pivot point P, the second end of the lever moves in direction A2 away from engagement with the axle (i.e. here, the pin 36 moves out of the hole 38) this allowing the armrest to rotate about the axle.

If two locking positions are provided - i.e. two holes 38 spaced about the axle at appropriate positions - the armrest will then also lock, due to the bias of the spring when the new end position is reached, when the user is no longer pressing the button. The presence of the bias component 34 means that the user only needs to press the button to release the locking mechanism, and does not need to keep the button pressed during rotation of the arm to the new position. The locking mechanism will then automatically lock into the locked state when the armrest reaches its new end position and the pin aligns with the hole at that position. In an example, the pin 36 has a rounded end so that it slides over the surface over the surface of the axle until it is aligned with a hole in a locking position.

The locking mechanism of this disclosure is structurally robust and simple, only requiring the user to push a button to lock and release the armrest and is therefore simple to assembly and operate and maintain. The mechanism ensures stability of the armrest in the locked position but can also be easily released by the hands of a user to stow the armrest away from the open position e.g. into the seat back and from the stowed position to the open position.

## Claims

1. An armrest locking mechanism comprising: an axle (20) defining an axis (A) therethrough, an armrest structure (10) mounted relative to the axle to be rotatable relative to the axle about the axis between an open position and a stowed position, a locking mechanism mounted within the armrest structure for releasably locking the armrest relative to the axle in one or both of the open position and the stowed position, the locking mechanism comprising: a lever (32) and a pivot point (P) between the first end and the second end, an actuation member (30) extending out of the armrest structure and in engagement with the first end of the lever, and means for providing locking engagement between the second end of the lever and the axle, and a biasing component (34) arranged to bias the first end of the lever in a second axial direction such that the second end of the lever is biased in an opposite first axial direction into engagement with the axle.

2. The armrest of claim 1, wherein the means for providing locking engagement comprises a locking feature (36) at the second end of the lever and means (38) on the axle for lockingly engage with the locking feature when the locking feature is aligned with the means (38) on the axle.

3. The armrest of claim 2, wherein the means on the axle comprises a first means corresponding to the open position of the armrest and a second means corresponding to the stowed position of the armrest.

4. The armrest according to any preceding claim, wherein the means for providing locking engagement comprises a pin (36) on the second end of the lever and one or more recesses (38) on the axle to receive the pin (36).

5. The armrest according to any preceding claim, wherein the biasing component is a spring (34) arranged to bias the second end of the lever (32) towards the axle (20).

6. The armrest according to any preceding claim, wherein the actuation member (30) is a push button.

7. The armrest according to claim 6, wherein the button has a shaft (31) to which the first end of the lever is attached.

8. The armrest according to claim 7, wherein the biasing component (34) is attached to the shaft.

9. The armrest of claim 8, wherein the shaft is provided with a recess to receive the biasing component.

10. The armrest according to any preceding claim, wherein the pivot point (P) is provided on a support (35) secured relative to the armrest structure.

11. The armrest according to claim 4 or any claim dependent thereon, wherein the pin (36) has a rounded end.

12. A seat having an armrest comprising an armrest locking mechanism as claimed in any preceding claim.

13. A seat as claimed in claim 12 having a seat back and a seat pan, wherein the armrest is in or adjacent the plane of the seatback when in the closed position and substantially parallel to the seat pan when in the open position.

14. A seat as claimed in claim 12 or 13, being an aircraft seat.
